# EUROPEAN PATENT SPECIFICATION

(11) **EP 3 441 485 B1**
(45) Date of publication and mention of the grant of the patent: **01.06.2022**
(21) Application number: 17779089.6
(22) Date of filing: 03.04.2017
(51) Int. Cl.: C22C 9/00, H01B 12/10, H01B 13/00, H01F 6/06

(54) **STABILIZER MATERIAL FOR SUPERCONDUCTOR, SUPERCONDUCTING WIRE AND SUPERCONDUCTING COIL**
STABILISATORMATERIAL FÜR SUPRALEITER, SUPRALEITENDEN DRAHT UND SUPRALEITENDE SPULE
MATÉRIAU STABILISATEUR POUR SUPRACONDUCTEUR, FIL SUPRACONDUCTEUR ET BOBINE SUPRACONDUCTRICE

(30) Priority: 06.04.2016 JP 2016076902
(43) Date of publication of application: 13.02.2019
(73) Proprietor: Mitsubishi Materials Corporation, Chiyoda-ku Tokyo 100-8117 (JP)
(72) Inventor: FUKUOKA Kosei, Kitamoto-shi Saitama 364-0022 (JP); ITO Yuki, Kitamoto-shi Saitama 364-0022 (JP); MAKI Kazunari, Aizuwakamatsu-shi Fukushima 965-8522 (JP)
(74) Representative: Hoffmann Eitle
(86) International application number: PCT/JP2017/013926
(87) International publication number: WO 2017/175711

(56) References cited:
- JP-A- H0 525 565
- JP-A- H10 147 850
- JP-A- 2004 035 940
- US-A1- 2013 142 567

## Description

### TECHNICAL FIELD

The present invention relates to a stabilizer material for superconductor (superconducting stabilizer) used for a superconducting wire, a superconducting wire including the stabilizer material for superconductor, and a superconducting coil including the superconducting wire.

### BACKGROUND ART

The superconducting wire described above is, for example, used in fields such as MRI, NMR, particle accelerators, maglev trains, and power storage apparatuses.

This superconducting wire has a multi-core structure in which a plurality of strands consisting of a superconducting material such as Nb-Ti or Nb₃Sn are bundled with a stabilizer material for superconductor interposed therebetween. In addition, a tape-shaped superconducting wire in which a superconducting material and a stabilizer material for superconductor are laminated is also provided. In order to further improve stability and safety, a superconducting wire including strands together with a channel member consisting of pure copper is also provided.

In the superconducting wire described above, in the case when the superconducting state is destroyed in a part of the superconducting material, the resistance increases greatly at that part, and thereby, the temperature of the superconducting material increases, and there is a concern that the temperature of the entire superconducting material exceeds the critical temperature and transition to a normal conducting state occurs. Therefore, in the superconducting wire, a stabilizer material for superconductor having a comparatively low resistance such as copper is arranged so as to be in contact with the superconducting material (strands). In the case when the superconducting state is partially destroyed, the current flowing through the superconducting material is temporarily bypassed to the stabilizer material for superconductor and the superconducting material is cooled to return to the superconducting state in the meantime.

The structure of the superconducting wire consists of wire strands of the superconducting material represented by Nb-Ti or Nb₃Sn and the stabilizer material for superconductor consisting of a copper material which are processed so as to be in contact with each other, and in which the plurality of strands including the superconducting material and the stabilizer material for superconductor are processed to be a single structural body. This process includes extrusion, rolling, wire drawing, drawing, and twisting.

In the stabilizer material for superconductor described above, in order to efficiently bypass the current, it is required that the resistance at extremely low temperatures be sufficiently low. Residual resistance ratio (RRR) is widely used as an indicator of electric resistance at extremely low temperatures. The residual resistance ratio (RRR) is the ratio ρ_{293K}/ρ_{4.2K} of the electrical resistivity ρ_{293K} at room temperature (293 K) to the electrical resistivity ρ_{4.2K} at the temperature of liquid helium (4.2 K), and the higher the residual resistance ratio (RRR) is, the better the performance as a stabilizer material for superconductor is exhibited.

For example, Patent Documents 1 to 3 propose a Cu material having a high residual resistance ratio (RRR).

Patent Document 1 discloses that a copper material having a high residual resistance ratio (RRR) is obtained by heating a copper material having a purity of 99.999% or more at temperatures of 650 to 800°C in an inert gas atmosphere for at least 30 minutes or more.

Patent Document 2 proposes a high-purity copper having an extremely low impurity concentration in which the amounts of specific elements (Fe, P, Al, As, Sn, and S) are defined.

In addition, Patent Document 3 proposes a Cu alloy in which a trace amount of Zr is added to high-purity copper having a low oxygen concentration. US 2013/142567 A1 discloses a doped 4N copper wire for bonding in microelectronics.

### PRIOR ART DOCUMENTS

### Patent Documents

Patent Document 1: Japanese Unexamined Patent Application, First Publication No. 04-224662
Patent Document 2: Japanese Unexamined Patent Application, First Publication No. 2011-236484
Patent Document 3: Japanese Unexamined Patent Application, First Publication No. 05-025565

### DISCLOSURE OF THE INVENTION

### Problems to be Solved by the Invention

It is known that the residual resistance ratio (RRR) is sufficiently high in an ultra-high purity copper where amounts of impurity elements are reduced to an extremely low level. However, there are problems in that, in order to purify copper to a high degree of purity, the production process becomes extremely complex and the production costs greatly increase.

Patent Document 1 shows a method of producing pure copper or a copper alloy having a high residual resistance ratio (RRR) using pure copper having a purity of 99.999% or more, but there is a problem in that the pure copper having a purity of 99.999% or more is used as the raw material; and thereby, the production costs greatly increases.

In addition, in Patent Document 2, the amounts of the specific elements (Fe, P, Al, As, Sn and S) are limited to less than 0.1 ppm; however, it is not easy to reduce the amounts of these elements to less than 0.1 ppm and the problem in which the production process becomes complex remains.

Furthermore, although the amounts of oxygen and Zr are defined in Patent Document 3, there are problems in that it is difficult to control the amounts of oxygen and Zr and it is difficult to stably produce a copper alloy having a high residual resistance ratio (RRR).

Furthermore, in recent years, there has been a demand for superconducting wires including a stabilizer material for superconductor having a higher residual resistance ratio (RRR) than that in the related art.

The invention has been made in view of the above circumstances and the invention aims to provide a stabilizer material for superconductor which is able to be produced with a relatively simple and inexpensive production process and which has a sufficiently high residual resistance ratio (RRR), a superconducting wire including this stabilizer material for superconductor, and a superconducting coil including this superconducting wire.

### Solutions for Solving the Problems

The present inventors conducted extensive research in order to solve this problem; and as a result, they confirmed that, among unavoidable impurities, S, Se, and Te in particular exert an adverse influence on the residual resistance ratio (RRR). It was found that by adding small amounts of Mg to pure copper to fix S, Se, and Te as specific compounds, it became possible to produce a stabilizer material for superconductor having a high residual resistance ratio (RRR) even in the case when heat treatment is performed over a wide temperature range.

The present invention was made based on the findings described above.

There is provided a stabilizer material for superconductor according to one aspect of the present invention as defined in the claims which is used for a superconducting wire.

According to the stabilizer material for superconductor having the configuration described above, the total concentration of unavoidable impurities other than O, H, C, N, and S, which are gas components, is 5 ppm by mass or more and 100 ppm by mass or less in a copper, and Mg as an additive element is contained for a total amount of 3 ppm by mass or more and 100 ppm by mass or less in the copper. Therefore, S, Se, and Te in the copper are fixed as compounds, and it is possible to improve the residual resistance ratio (RRR).

In addition, since the copper is used in which the total concentration of unavoidable impurities other than O, H, C, N, and S, which are gas components, is 5 ppm by mass or more and 100 ppm by mass or less, it is not necessary to carry out excessively high purification of the copper, thus the production process is simple and it is possible to reduce the production costs.

Since compounds including one kind or more selected from MgS and MgSO₄ are present in the matrix, S, Se, and Te present in the copper are effectively fixed, and it is possible to improve the residual resistance ratio (RRR). In addition, since the compounds described above are thermally stable, it is possible to stably maintain a high residual resistance ratio (RRR) even in the case when heat treatment is performed over a wide temperature range.

In the present invention, the compounds described above also include compounds in which a part of S in MgS and MgSO₄ is substituted with Te or Se.

In the stabilizer material for superconductor according to one aspect of the present invention, it is preferable that, of the unavoidable impurities, the amount of Fe is 10 ppm by mass or less, the amount of Ni is 10 ppm by mass or less, the amount of As is 5 ppm by mass or less, the amount of Ag is 50 ppm by mass or less, the amount of Sn is 4 ppm by mass or less, the amount of Sb is 4 ppm by mass or less, the amount of Pb is 6 ppm by mass or less, the amount of Bi is 2 ppm by mass or less, and the amount of P is 3 ppm by mass or less.

Among unavoidable impurities, specific impurity elements such as Fe, Ni, As, Ag, Sn, Sb, Pb, Bi, and P have an effect of decreasing the residual resistance ratio (RRR). Therefore, the amounts of these elements are defined as described above; and thereby, it is possible to effectively improve the residual resistance ratio (RRR).

In the stabilizer material for superconductor according to the present invention, a ratio y/x of the total amount of the additive element Mg (y ppm by mass) to the total amount of S, Se, and Te (x ppm by mass) is in the range of 0.5≤y/x≤100.

Since the ratio y/x of the total amount of the additive element Mg (y ppm by mass) to the total amount of S, Se, and Te (x ppm by mass) is in the range described above, S, Se, and Te in the copper can be effectively fixed as compounds including one kind or more selected from MgS, and MgSO₄, and it is possible to effectively prevent decreases in the residual resistance ratio (RRR) caused by dissolving S, Se, and Te in the matrix.

In addition, in the stabilizer material for superconductor according to one aspect of the present invention, it is preferable that the residual resistance ratio (RRR) is 250 or more.

In this case, since the residual resistance ratio (RRR) is 250 or more which is relatively high, the resistance value at extremely low temperatures is sufficiently low, thus it is possible to effectively bypass the current when the superconducting state of the superconducting material is destroyed, which makes it suitable as a stabilizer material for superconductor.

The superconducting wire according to one aspect of the present invention includes: a strand including a superconducting material; and the stabilizer material for superconductor described above.

In the superconducting wire having this configuration, since the stabilizer material for superconductor having a high residual resistance ratio (RRR) is included as described above, even when the superconducting state of the superconducting material is destroyed, it is possible to effectively bypass the current flowing through the superconducting material to the stabilizer material for superconductor, and the propagation of the normal conducting state to the entire superconducting material (the transition of the state of the entire superconducting wire to the normal conducting state) can be prevented. Therefore, it is possible to stably use the superconducting wire.

A superconducting coil according to one aspect of the present invention has a structure including a winding portion in which the superconducting wire described above is wound around a peripheral surface of a winding frame.

In the superconducting coil having this configuration, since the superconducting wire including the stabilizer material for superconductor having a high residual resistance ratio (RRR) as described above is used, it is possible to stably use the superconducting coil.

### Effects of the Invention

According to one aspect of the present invention, it is possible to provide a stabilizer material for superconductor which is able to be produced with a relatively simple and inexpensive production process and which has a sufficiently high residual resistance ratio (RRR), a superconducting wire including this stabilizer material for superconductor, and a superconducting coil including this superconducting wire.

### BRIEF DESCRIPTION OF THE DRAWINGS

FIG. 1 is a cross-sectional schematic diagram of a superconducting wire including a stabilizer material for superconductor which is one embodiment of the present invention.
FIG. 2 is a longitudinal cross-sectional schematic diagram of a filament used for the superconducting wire shown in FIG. 1.
FIG. 3 is a schematic diagram of a superconducting wire including a stabilizer material for superconductor which is one of other embodiments of the present invention.
FIG. 4 is a schematic diagram of a superconducting wire including a stabilizer material for superconductor and a channel member, which is one of other embodiments of the present invention.
FIG. 5 is a view showing the SEM observation result, the compound analysis result, and the result of the electron backscatter diffraction of the stabilizer material for superconductor of Invention Example 2 in the Examples of the present invention.
FIG. 6 is a view showing the SEM observation result, the compound analysis result, and the result of the electron backscatter diffraction of the stabilizer material for superconductor of Invention Example 15 in the Examples of the present invention.

### EMBODIMENTS FOR CARRYING OUT THE INVENTION

A description will be provided below of the stabilizer material for superconductor 20 and the superconducting wire 10 according to one embodiment of the present invention with reference to the accompanying drawings.

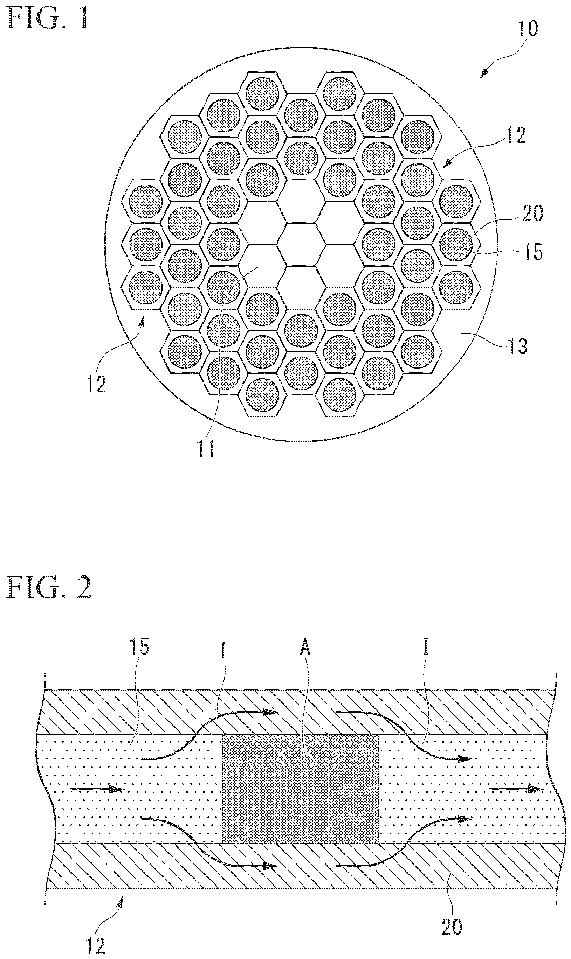

As shown in FIG. 1, the superconducting wire 10 in the present embodiment includes a core portion 11, a plurality of filaments 12 arranged on the outer peripheral side of the core portion 11, and an outer shell portion 13 arranged on the outer peripheral side of the plurality of the filaments 12.

In the present embodiment, as shown in FIG. 1 and FIG. 2, the filament 12 described above has a structure in which a strand 15 consisting of a superconducting material is surrounded with the stabilizer material for superconductor 20. That is, the filament 12 includes the strand 15 and the stabilizer material for superconductor 20 which surrounds the strand 15.

As shown in FIG. 2, in the case when the superconducting state is destroyed in a part of the strand 15 consisting of a superconducting material such that a normal conducting region A is generated, a current I flowing through the strand 15 consisting of a superconducting material is temporarily bypassed to the stabilizer material for superconductor 20.

The stabilizer material for superconductor 20 of the present embodiment consists of a copper material, and the copper material contains Mg as an additive element for a total amount of 3 ppm by mass or more and 100 ppm by mass or less, with the remainder being Cu and unavoidable impurities, and the total concentration of the unavoidable impurities other than O, H, C, N, and S, which are gas components, is 5 ppm by mass or more and 100 ppm by mass or less.

In the stabilizer material for superconductor 20 of the present embodiment, compounds including one kind or more selected from MgS and MgSO₄ are present in the matrix.

In the MgS and MgSO₄ described above, a part of S may be substituted with Te or Se. Since the amounts of Te and Se are smaller than the amount of S, the amount of compounds consisting of either one of Te or Se with Mg is small, and compounds are formed in a state where a part of S in the compounds described above is substituted with Te or Se.

In addition, in the stabilizer material for superconductor 20 of the present embodiment, among unavoidable impurities, the amount of Fe is 10 ppm by mass or less, the amount of Ni is 10 ppm by mass or less, the amount of As is 5 ppm by mass or less, the amount of Ag is 50 ppm by mass or less, the amount of Sn is 4 ppm by mass or less, the amount of Sb is 4 ppm by mass or less, the amount of Pb is 6 ppm by mass or less, the amount of Bi is 2 ppm by mass or less, and the amount of P is 3 ppm by mass or less.

Furthermore, in the stabilizer material for superconductor 20 of the present embodiment, a ratio y/x of the total amount of additive element Mg (y ppm by mass) to the total amount of S, Se, and Te, (x ppm by mass) is in the range of 0.5≤y/x≤100.

In addition, in the stabilizer material for superconductor 20 of the present embodiment, the residual resistance ratio (RRR) is 250 or more.

A description will be provided below of the reasons for defining the component composition, the compounds, and the residual resistance ratio (RRR) as described above.

### (Additive element Mg)

Among the unavoidable impurities included in a copper, S, Se, and Te are elements which are dissolved in the copper that greatly decrease the residual resistance ratio (RRR). Therefore, in order to improve the residual resistance ratio (RRR), it is necessary to remove the influence of S, Se, and Te.

The additive element Mg is an element which is highly reactive with S, Se, and Te. The additive element described above forms compounds with S, Se, and Te; and thereby, it is possible to prevent S, Se, and Te from being dissolved in a copper. Due to this, it is possible to effectively improve the residual resistance ratio (RRR).

In the case where the amount of additive element Mg is less than 3 ppm by mass, there is a concern that it will not be possible to effectively fix S, Se, and Te. On the other hand, in the case where the amount of additive element Mg exceeds 100 ppm by mass, there is a concern that the residual resistance ratio (RRR) will be greatly decreased. From the above-described reasons, in the present invention, the amount of additive element Mg is defined to be within the range of 3 ppm by mass or more and 100 ppm by mass or less.

In order to effectively fix S, Se, and Te, the lower limit of the amount of the additive element Mg is preferably 3.5 ppm by mass or more, and more preferably 4.0 ppm by mass or more. On the other hand, in order to effectively prevent decreases in residual resistance ratio (RRR), the upper limit of the amount of the additive element Mg is preferably 50 ppm by mass or less, more preferably 20 ppm by mass or less, and even more preferably 15 ppm by mass or less.

### (Unavoidable impurity elements other than gas components)

The residual resistance ratio (RRR) is improved by lowering the concentrations of unavoidable impurities other than gas components (O, H, C, N, and S). On the other hand, if the concentration of unavoidable impurities is to be reduced more than necessary, the production process becomes complex; and thereby, the production costs are drastically increased. Therefore, in the present invention, the total concentration of unavoidable impurities other than gas components (O, H, C, N, and S) is set to be in a range of 5 ppm by mass or more and 100 ppm by mass or less.

In order to set the total concentration of unavoidable impurities other than the gas components (O, H, C, N, and S) to be in a range of 5 ppm by mass or more and 100 ppm by mass or less, it is possible to use high-purity copper with a purity of 99 to 99.999 mass% or oxygen free copper (C10100 and C10200) as the raw material. However, in the case when the concentration of O is high, Ca, La, and Ce will react with O. Therefore, the O concentration is preferably set to 20 ppm by mass or less. The O concentration is more preferably 10 ppm by mass or less, and most preferably 5 ppm by mass or less.

In order to effectively prevent increases in the production costs, the lower limit of the unavoidable impurities other than (not including) O, H, C, N, and S, which are gas components, is preferably set to 7 ppm by mass or more, and more preferably set to more than 10 ppm by mass. In addition, in the case when O, H, C, N, and S, which are gas components, are included in the unavoidable impurities, the total concentration of unavoidable impurities including O, H, C, N, and S, which are gas components, is preferably more than 10 ppm by mass, more preferably 15 ppm by mass or more, and most preferably 20 ppm by mass or more. On the other hand, in order to effectively improve the residual resistance ratio (RRR), the upper limit of the unavoidable impurities other than (not including) O, H, C, N, and S, which are gas components, is preferably 90 ppm by mass or less, and more preferably 80 ppm by mass or less. In addition, it is preferable to set the upper limit of the unavoidable impurities including O, H, C, N, and S, which are gas components, to 110 ppm by mass or less.

Unavoidable impurities other than gas components in the present invention are Fe, Ni, As, Ag, Sn, Sb, Pb, Bi, P, Li, Be, B, F, Na, Al, Si, Ca, Cl, K, Sc, V, Cr, Nb, Co, Zn, Ga, Ge, Br, Rb, Sr, Mo, Ru, Pd, Cd, In, I, Cs, Ba, rare earth elements, Hf, Ta, W, Re, Os, Ir, Pt, Au, Hg, Tl, Th, and U.

### (Compounds present in matrix)

As described above, the additive element Mg forms compounds with the elements such as S, Se, and Te so as to prevent the elements such as S, Se, and Te from being dissolved in the copper.

Therefore, compounds (including compounds in which part of S is substituted with Te or Se) including one kind or more selected from MgS and MgSO₄ are present in the matrix, and S, Se, and Te are fixed; and thereby, it is possible to effectively improve the residual resistance ratio (RRR).

Compounds including one kind or more selected from MgS and MgSO₄ have high thermal stability and are able to be stably present even at high temperatures. These compounds are produced during the melting and casting process, but due to the characteristics described above, the compounds are stably present even after processing and after heat treatment. Therefore, even in the case when heat treatment is performed in a wide temperature range, S, Se, and Te are fixed as compounds, and it is possible to stably obtain a high residual resistance ratio (RRR).

In addition, compounds including one kind or more selected from MgS and MgSO₄ are present in a number density of 0.001 particles/µm² or more; and thereby, it is possible to effectively improve the residual resistance ratio (RRR). In addition, in order to further improve the residual resistance ratio (RRR), it is preferable to set the number density of the compounds to 0.005 particles/µm² or more. The number density of the compounds is more preferably 0.007 particles/µm² or more. In the present invention, the above-described number density is applicable to compounds having a particle size of 0.1 µm or more.

In the present invention, since the amounts of elements such as S, Se, and Te are sufficiently small, the upper limit of the number density of the compounds described above (particle size of 0.1 µm or more) is 0.1 particles/µm² or less, preferably 0.09 particles/µm² or less, and more preferably 0.08 particles/µm² or less. The total amount of S, Se, and Te in the stabilizer material for superconductor 20 is more than 0 ppm by mass and 25 ppm by mass or less, and preferably 15 ppm by mass or less; however, the total amount is not limited thereto. It is preferable that the total amount of S, Se, and Te in the stabilizer material for superconductor 20 is as small as possible; however, in the case when the total amount of S, Se, and Te is lowered to an extreme level, the costs increase. Therefore, the total amount of S, Se, and Te in the stabilizer material for superconductor 20 is more preferably 0.1 ppm by mass or more, even more preferably 0.5 ppm by mass or more, and even more preferably 1.0 ppm by mass or more; however, the total amount is not limited thereto.

### (Fe, Ni, As, Ag, Sn, Sb, Pb, Bi, and P)

Among the unavoidable impurities, specific impurity elements such as Fe, Ni, As, Ag, Sn, Sb, Pb, Bi, and P have an effect of decreasing the residual resistance ratio (RRR). Therefore, the amount of each of these elements is defined; and thereby, it is possible to effectively prevent the decrease in the residual resistance ratio (RRR). Therefore, in the present embodiment, the amount of Fe is set to 10 ppm by mass or less, the amount of Ni is set to 10 ppm by mass or less, the amount of As is set to 5 ppm by mass or less, the amount of Ag is set to 50 ppm by mass or less, the amount of Sn is set to 4 ppm by mass or less, the amount of Sb is set to 4 ppm by mass or less, the amount of Pb is set to 6 ppm by mass or less, the amount of Bi is set to 2 ppm by mass or less, and the amount of P is set to 3 ppm by mass or less.

In order to more effectively prevent the decrease in the residual resistance ratio (RRR), the amount of Fe is preferably set to 4.5 ppm by mass or less, the amount of Ni is preferably set to 3 ppm by mass or less, the amount of As is preferably set to 3 ppm by mass or less, the amount of Ag is preferably set to 38 ppm by mass or less, the amount of Sn is preferably set to 3 ppm by mass or less, the amount of Sb is preferably set to 1.5 ppm by mass or less, the amount of Pb is preferably set to 4.5 ppm by mass or less, the amount of Bi is preferably set to 1.5 ppm by mass or less, and the amount of P is preferably set to 1.5 ppm by mass or less. Furthermore, the amount of Fe is more preferably set to 3.3 ppm by mass or less, the amount of Ni is more preferably set to 2.2 ppm by mass or less, the amount of As is more preferably set to 2.2 ppm by mass or less, the amount of Ag is more preferably set to 28 ppm by mass or less, the amount of Sn is more preferably set to 2.2 ppm by mass or less, the amount of Sb is more preferably set to 1.1 ppm by mass or less, the amount of Pb is more preferably set to 3.3 ppm by mass or less, the amount of Bi is more preferably set to 1.1 ppm by mass or less, and the amount of P is more preferably set to 1.1 ppm by mass or less. The lower limits of the amounts of Fe, Ni, As, Ag, Sn, Sb, Pb, Bi, and P are 0 ppm by mass. In addition, since there is a concern that excessive reduction of the above-described amounts may result in an increase in the production costs, the amount of Fe is preferably set to 0.1 ppm by mass or more, the amount of Ni is preferably set to 0.1 ppm by mass or more, the amount of As is preferably set to 0.1 ppm by mass or more, the amount of Ag is preferably set to 0.1 ppm by mass or more, the amount of Sn is preferably set to 0.1 ppm by mass or more, the amount of Sb is preferably set to 0.1 ppm by mass or more, the amount of Pb is preferably set to 0.1 ppm by mass or more, the amount of Bi is preferably set to 0.1 ppm by mass or more, and the amount of P is preferably set to 0.1 ppm by mass or more. However, the lower limits are not limited thereto.

### (Ratio y/x of total amount of additive elements to total amount of S, Se, and Te)

As described above, the additive element Mg forms compounds with elements such as S, Se, and Te. In the case where the ratio y/x of the total amount of the additive element Mg to the total amount of S, Se, and Te is less than 0.5, the amount of the additive elements is insufficient, and there is a concern in that it may not be possible to effectively fix the elements such as S, Se, and Te. On the other hand, in the case where the ratio y/x of the total amount of the additive element Mg (y ppm by mass) to the total amount of S, Se, and Te (x ppm by mass) exceeds 100, a large amount of excess additive elements which do not react with S, Se, and Te may be present, and this causes a concern that the workability may be deteriorated.

From the above-described reasons, in the present invention, the ratio y/x of the total amount of additive element Mg (y ppm by mass) to the total amount of S, Se, and Te (x ppm by mass) is defined to be within the range of 0.5 or more and 100 or less.

In order to effectively fix the elements such as S, Se, and Te as compounds, the lower limit of the ratio y/x of the total amount of the additive element Mg to the total amount of S, Se, and Te is preferably 0.75 or more, and more preferably 1.0 or more. In addition, in order to effectively prevent decreases in workability, the upper limit of the ratio y/x of the total amount of the additive element Mg to the total amount of S, Se, and Te is preferably 75 or less, and more preferably 50 or less.

### (Residual Resistance Ratio (RRR))

Since the residual resistance ratio (RRR) of the stabilizer material for superconductor 20 according to the present embodiment is 250 or more, the resistance value is low and it is possible to effectively bypass the current at extremely low temperatures. The residual resistance ratio (RRR) is preferably 280 or more, more preferably 300 or more, and most preferably 400 or more. The residual resistance ratio (RRR) is preferably 10000 or less, more preferably 5000 or less, even more preferably 3000 or less, and 2000 or less is most preferable in order to effectively prevent increases in production costs; however, the residual resistance ratio (RRR) is not limited thereto.

The stabilizer material for superconductor 20 of the present embodiment is produced by a process including a melting and casting step, a plastic working step, and a heat treatment step.

A copper wire rod having the composition shown in the present embodiment may be produced by a continuous casting and rolling method (for example, the SCR method) or the like, and the stabilizer material for superconductor 20 of the present embodiment may be produced using this copper wire rod as a base material. In this case, the production efficiency of the stabilizer material for superconductor 20 of the present embodiment is improved, and it is possible to greatly reduce the production costs. The continuous casting and rolling method referred thereto is a step in which a copper wire rod is produced using a continuous casting and rolling facility including a belt-wheel type continuous casting apparatus and a continuous rolling device, and a drawn copper wire is produced by using this copper wire rod as a base material.

According to the stabilizer material for superconductor 20 of the present embodiment having the above-described configurations, the total concentration of the unavoidable impurities other than O, H, C, N, and S, which are gas components, is set to be in a range of 5 ppm by mass or more and 100 ppm by mass or less in a copper, and in the copper, one kind or more of additive elements selected from Mg, Mn, Ti, Y, and Zr are contained for a total amount of 3 ppm by mass or more and 100 ppm by mass or less. Therefore, S, Se, and Te in the copper are fixed as compounds and it is possible to improve the residual resistance ratio (RRR).

In addition, since a copper is used in which the total concentration of unavoidable impurities other than O, H, C, N, and S, which are gas components, is 5 ppm by mass or more and 100 ppm by mass or less, it is not necessary to carry out excessively high purification of the copper, thus the production process is simple and it is possible to reduce the production costs.

According to the stabilizer material for superconductor 20 of the present embodiment, compounds including one kind or more selected from MgS and MgSO₄ are present in the matrix. For this reason, S, Se, and Te present in the copper are effectively fixed, and it is possible to improve the residual resistance ratio (RRR). In addition, since the compounds described above are thermally stable, it is possible to stably obtain a high residual resistance ratio (RRR) even in the case when heat treatment is performed in a wide temperature range.

In particular, in the present embodiment, since the number density of the above-described compounds having a particle size of 0.1 µm or more is 0.001 particles/µm² or more, it is possible to effectively fix S, Se, and Te as compounds, and it is possible to effectively improve the residual resistance ratio (RRR).

Further, in the present embodiment, the amounts of Fe, Ni, As, Ag, Sn, Sb, Pb, Bi, and P which influence the residual resistance ratio (RRR) are defined such that the amount of Fe is 10 ppm by mass or less, the amount of Ni is 10 ppm by mass or less, the amount of As is 5 ppm by mass or less, the amount of Ag is 50 ppm by mass or less, the amount of Sn is 4 ppm by mass or less, the amount of Sb is 4 ppm by mass or less, the amount of Pb is 6 ppm by mass or less, the amount of Bi is 2 ppm by mass or less, and the amount of P is 3 ppm by mass or less. For this reason, it is possible to effectively improve the residual resistance ratio (RRR) of the stabilizer material for superconductor 20.

In addition, in the present invention, a ratio y/x of the total amount of the additive element Mg (y ppm by mass) to the total amount of S, Se, and Te (x ppm by mass) is within the range of 0.5≤y/x≤100. For this reason, it is possible to effectively fix S, Se, and Te in a copper as compounds with the additive element, and it is possible to effectively prevent decreases in the residual resistance ratio (RRR). In addition, a large amount of excess additive element which does not react with S, Se and Te is not present, and it is possible to preserve the workability.

In addition, in the present embodiment, since the residual resistance ratio (RRR) is 250 or more which is relatively high, the resistance value at extremely low temperatures is sufficiently low.

Thus, since the superconducting wire 10 of the present embodiment includes the stabilizer material for superconductor 20 having a high residual resistance ratio (RRR) as described above, it is possible to effectively bypass the current to the stabilizer material for superconductor 20 even in the case when a normal conducting region A is generated in which the superconducting state is destroyed in the strand 15 consisting of a superconducting material and the superconducting wire 10 can be stably used.

The superconducting coil of the present embodiment includes a winding frame and a winding portion, and the winding portion is a superconducting wire of the present embodiment wound around the peripheral surface of the winding frame.

Although the stabilizer material for superconductor, the superconducting wire, and the superconducting coil, which are embodiments of the present invention, are described above, the present invention is not limited thereto and is able to be appropriately modified in the range of the technical features of the invention.

For example, the core portion 11 and the outer shell portion 13 that are included in the superconducting wire 10 may also consist of a copper material having the same composition as that of the stabilizer material for superconductor 20 of the present embodiment.

In the same manner as the stabilizer material for superconductor 20, in the case when the superconducting state is destroyed in a part of the strand 15 consisting of a superconducting material and the normal conducting region A is generated, the current I flowing through the strand 15 consisting of a superconducting material can be temporarily bypassed.

In the embodiment described above, as shown in FIG. 1, an example is given in which the superconducting wire 10 includes the stabilizer material for superconductor 20 and the outer shell portion 13; however, the superconducting wire 10 is not limited thereto, and the superconducting wire 10 may have a configuration in which the stabilizer material for superconductor 20 and the outer shell portion 13 are integrated when made into a product.

In addition, in the embodiment described above, as shown in FIG. 1, the superconducting wire 10 having a structure in which the plurality of the filaments 12 are bundled is described as an example, but the present invention is not limited thereto.

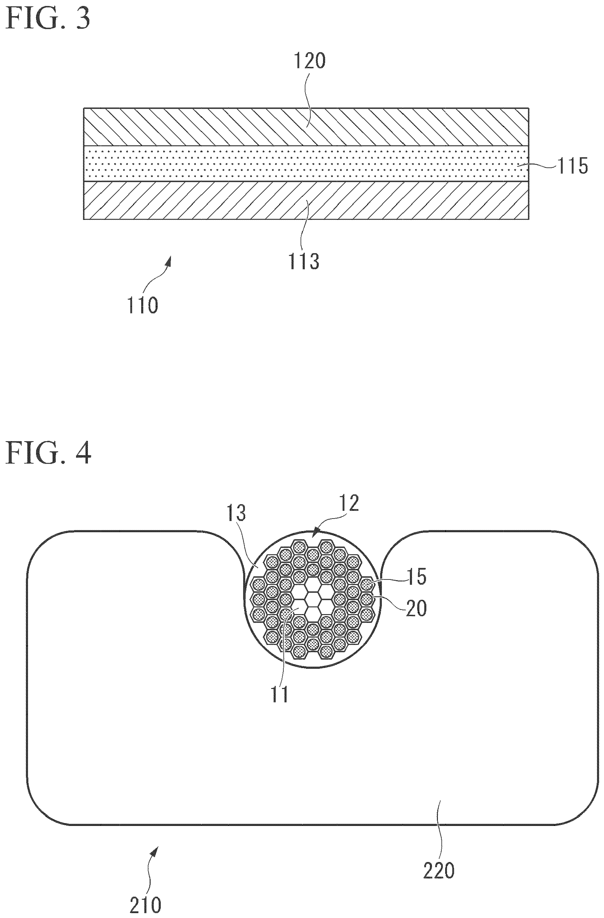

For example, as shown in FIG. 3, the superconducting wire 10 may be a superconducting wire 110 having a structure in which a superconducting material 115 and a stabilizer material for superconductor 120 are laminated and arranged on a tape-like substrate 113. That is, the superconducting wire 110 may include the tape-like substrate 113, and the superconducting material 115 and the stabilizer material for superconductor 120 which are laminated on the substrate 113.

Furthermore, as shown in FIG. 4, a superconducting wire 210 having a structure in which a plurality of the filaments 12 are bundled and then assembled in a channel member 220 consisting of pure copper may be adopted. That is, the superconducting wire 210 may include a channel member 220 having a recess portion and a bundle of a plurality of the filaments 12 incorporated in the recess portion. The bundle of a plurality of the filaments 12 may be, for example, the superconducting wire 10 shown in FIG. 1.

### EXAMPLES

A description will be provided below of the results of confirmatory experiments conducted to confirm the effect of the present invention.

In this example, as a laboratory experiment, high-purity copper having a purity of 99.9 mass% or more to 99.9999 mass% or less and base alloys of Mg, Mn, Ti, Y, and Zr were used as raw materials, and compositions were adjusted to obtain the values shown in Table 1. In addition, with regard to Fe, Ni, As, Ag, Sn, Sb, Pb, Bi, P, and other impurities, a base alloy of each element was prepared from Fe, Ni, As, Ag, Sn, Sb, Pb, Bi, and P having a purity of 99.9 mass% or more and pure copper having a purity of 99.99 mass%, and the composition was adjusted using the base alloys.

First, high-purity copper was melted in a reducing gas atmosphere of N₂+CO using an electric furnace, then various base alloys of additive elements and impurities were added thereto and the concentration of the elements were adjusted to the predetermined values, and the resultant was casted into a predetermined mold to obtain an ingot having a diameter of 70 mm and a length of 150 mm. From the ingot, a square bar having cross-sectional dimensions of 25 mm × 25 mm was cut out and subjected to hot rolling at 850°C to obtain a hot-rolled wire rod having a diameter of 8 mm. The hot-rolled wire rod was subjected to cold drawing to form a fine wire having a diameter of 2.0 mm, and the fine wire was subjected to heat treatment for 1 hour at the temperature shown in Table 2 to produce a wire for evaluation.

In this Example, it was observed that impurity elements were mixed into a copper in the process of melting and casting.

Using these wires for evaluation, the following items were evaluated.

### (Residual resistance ratio (RRR))

Using the four-terminal method, the electrical resistivity (ρ_{293K}) at 293K and the electrical resistivity (ρ_{4.2K}) at the temperature of liquid helium (4.2 K) were measured, and RRR=ρ_{293K}/ρ_{4.2K} was calculated. For the measurement, terminals with a terminal distance of 100 mm were used.

### (Composition Analysis)

Using the sample from which the residual resistance ratio (RRR) was measured, composition analysis was carried out as follows. For elements other than gas components, glow discharge mass spectrometry was used in the case where the amount was less than 10 ppm by mass, and inductively coupled plasma emission spectrometry was used in the case where the amount was 10 ppm by mass or more. In addition, infrared absorption method was used for analyzing the amount of S. All the measured O concentrations were 10 ppm by mass or less. The infrared absorption method was used for analyzing the amount of O.

### (Observation of Compound Particles)

Particles were observed using a scanning electron microscope (SEM) and energy dispersive X-ray spectroscopy (EDX) was performed. Regions in which the dispersion state of the compounds was not specific were observed at 20,000 magnification (observation visual field: 20 µm²). 50 fields of view (observation visual field: 1000 µm²) were imaged. Regarding the particle size of the intermetallic compound, the average length of the major axis (the length of the longest straight line in a particle which does not come into contact with the particle edge) and the minor axis (the length of the longest straight line in the direction orthogonal to the major axis which does not come into contact with the particle edge) of the intermetallic compound was used. With regard to the compound having a particle size of 0.1 µm or more, the composition was analyzed using the energy dispersive X-ray spectroscopy (EDX) method, and it was confirmed that the compound included Mg, Mn, Ti, Y, Zr, and S.

Furthermore, electron backscatter diffraction was carried out using a transmission electron microscope (TEM) to identify MgS, MgSO₄, MnS, TiS, YS, Y₂SO₂, and ZrS compounds. Among these compounds, it was confirmed that MgS, MnS, and YS had a NaCl type crystal structure, TiS had a NiAs type crystal structure, MgSO₄ had a CuSO₄ type crystal structure, and Y₂SO₂ had a Ce₂SO₂ type crystal structure. In the column "Presence or absence of compounds" in Table 2, as a result of the above-described observations, a case in which the compounds of MgS, MgSO₄, MnS, TiS, YS, Y₂SO₂, and ZrS were confirmed was evaluated as "a" and a case in which the compounds were not confirmed was evaluated as "b".

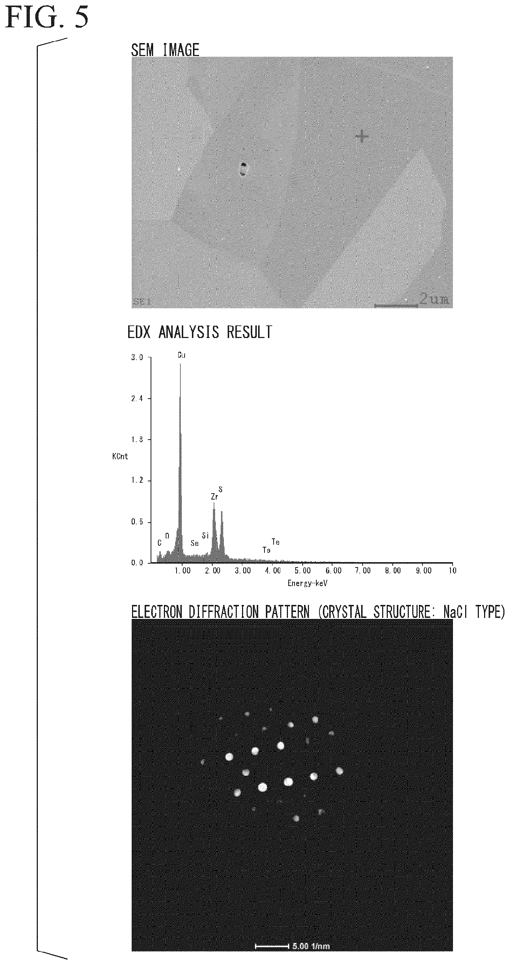

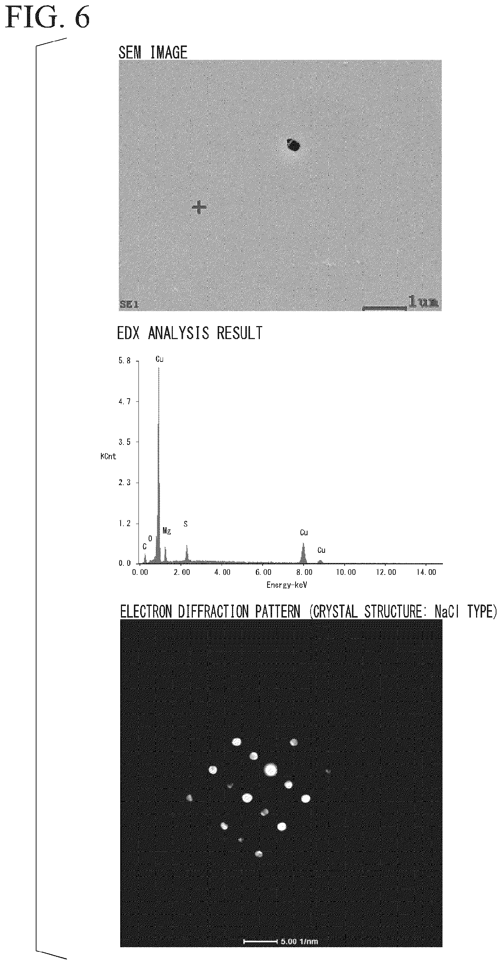

The evaluation results are shown in Table 2. In addition, the SEM observation result, the analysis result, and the electron diffraction result of the compound of Invention Example 2 are shown in FIG. 5, and the SEM observation result, the analysis result, and the electron diffraction result of the compound of Invention Example 15 are shown in FIG. 6.

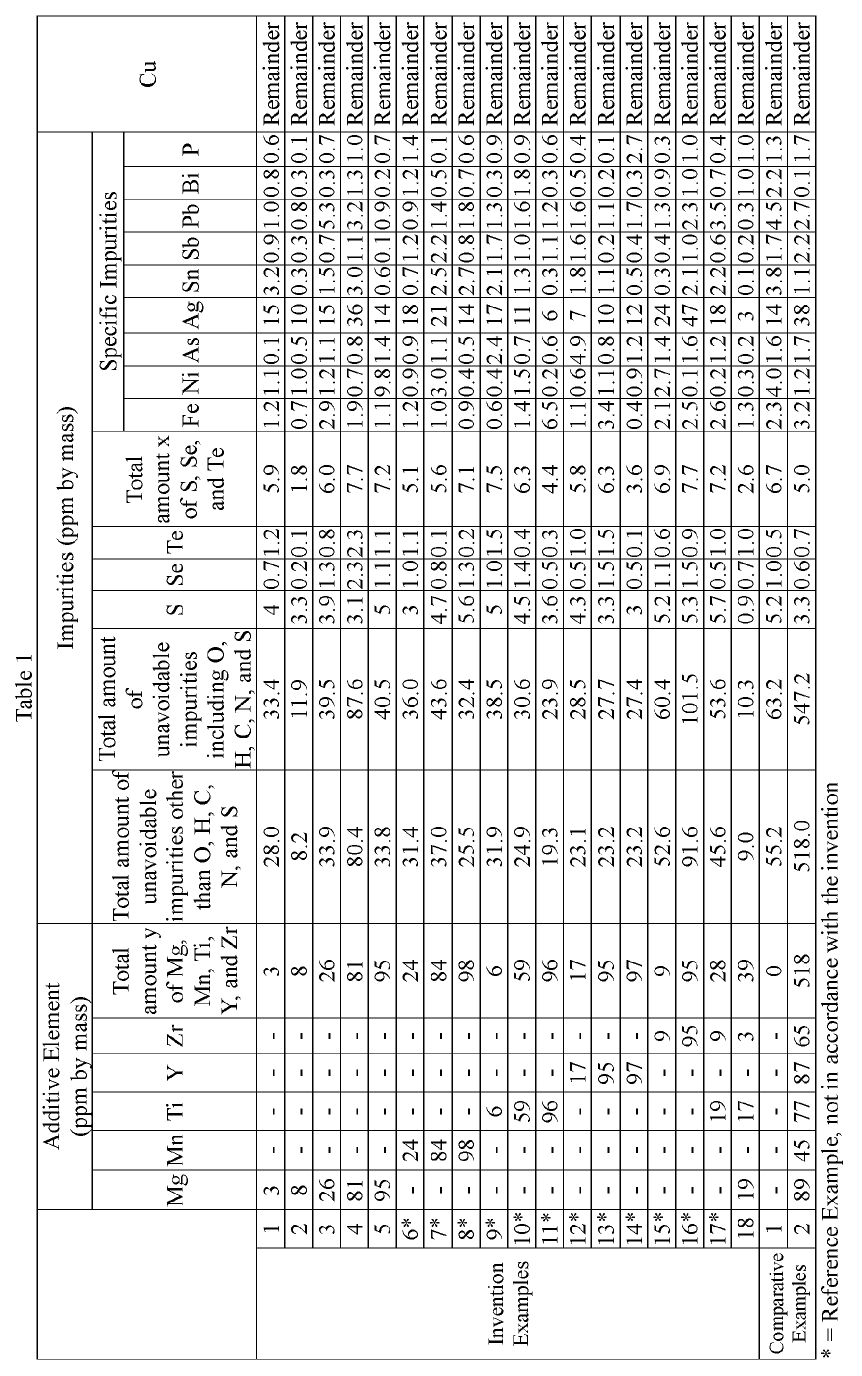

**Table 2**

| | | y/x 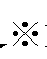 ¹ | Presence or absence of compounds^{∗2} | Heat treatment temperature^{∗3} (°C) | RRR |
|---|---|---|---|---|---|
| Invention Examples | 1 | 0.5 | a | 960 | 574 |
| | 2 | 6.1 | a | 800 | 689 |
| | 3 | 4.3 | a | 940 | 320 |
| | 4 | 10.5 | a | 710 | 298 |
| | 5 | 13.2 | a | 910 | 288 |
| | 6^{∗} | 4.7 | a | 790 | 416 |
| | 7^{∗} | 15.0 | a | 860 | 550 |
| | 8^{∗} | 13.8 | a | 990 | 258 |
| | 9^{∗} | 0.8 | a | 900 | 450 |
| | 10^{∗} | 9.4 | a | 820 | 446 |
| | 11^{∗} | 21.8 | a | 930 | 256 |
| | 12^{∗} | 2.9 | a | 730 | 347 |
| | 13^{∗} | 15.1 | a | 880 | 404 |
| | 14^{∗} | 26.9 | a | 970 | 287 |
| | 15^{∗} | 1.7 | a | 840 | 440 |
| | 16^{∗} | 12.3 | a | 810 | 308 |
| | 17^{∗} | 3.9 | a | 810 | 374 |
| | 18 | 15.1 | a | 880 | 608 |
| Comparative Examples | 1 | - | b | 900 | 167 |
| | 2 | 31.3 | a | 870 | 30 |

| | | | | | |
|---|---|---|---|---|---|
| ^{∗} = Reference Example, not in accordance with the invention ^{∗}1 y/x: the ratio of the total amount y ppm by mass of additive elements to the total amount x ppm by mass of S, Se, and Te ^{∗}2 a: Compounds including S were present, and b: Compounds including S were absent. ^{∗}3 The final heat treatment temperature of sample | | | | | |

In Comparative Example 1, one kind or more of additive elements selected from Mg, Mn, Ti, Y, and Zr were not added, and, in the matrix, compounds including one kind or more selected from MgS, MgSO₄, MnS, TiS, YS, Y₂SO₂, and ZrS were not present and the residual resistance ratio (RRR) was 167 which was low.

In Comparative Example 2, the amount of one kind or more of the additive elements selected from Mg, Mn, Ti, Y, and Zr was 518 ppm by mass which was more than the range of the present invention, and the residual resistance ratio (RRR) was 30 which was low.

In contrast, in Invention Examples 1 to 18, even in the case when heat treatment was performed over a wide temperature range, the residual resistance ratio (RRR) was 250 or more and it was confirmed that Invention Examples 1 to 18 were particularly suitable as a stabilizer material for superconductor.

In addition, as shown in FIG. 5, in the case when Zr was added, a compound including ZrS having a NaCl type crystal structure was observed.

Furthermore, as shown in FIG. 6, in the case when Mg was added, a compound including MgS having a NaCl type crystal structure was observed.

From the above-described results, it was confirmed that according to the present invention, it is possible to provide a stabilizer material for superconductor which is able to be produced with a relatively simple and inexpensive production process and has a sufficiently high residual resistance ratio (RRR).

### Industrial Applicability

The stabilizer material for superconductor of the present invention is able to be produced with a relatively simple and inexpensive production process and has a sufficiently high residual resistance ratio (RRR). Therefore, it is possible to suitably apply the stabilizer material for superconductor of the present invention to superconducting wires and superconducting coils used in MRI, NMR, particle accelerators, maglev trains, power storage apparatuses, and the like.

### Explanation of Reference Signs

10, 110, 210: superconducting wire
20, 120: stabilizer material for superconductor

## Claims

1. A stabilizer material for superconductor used for a superconducting wire, the stabilizer material for superconductor comprising: a copper material,
wherein the copper material contains Mg as an additive element for a total amount of 3 ppm by mass or more and 100 ppm by mass or less, with the remainder being Cu and unavoidable impurities,
the total concentration of the unavoidable impurities other than O, H, C, N, and S, which are gas components, is 5 ppm by mass or more and 100 ppm by mass or less,
the total amount of S, Se, and Te which are included in the unavoidable impurities is more than 0 ppm by mass and 25 ppm by mass or less,
a ratio y/x of the total amount of Mg as the additive element (y ppm by mass) to the total amount of S, Se, and Te (x ppm by mass) is in the range of 0.5≤y/x≤100,
the amounts of Te and Se are smaller than the amount of S,
compounds including one kind or more selected from MgS and MgSO₄, wherein a part of S may be substituted with Te or Se, are present in the matrix, and
the number density of the compounds having a particle size of 0.1 µm or more is 0.001 particles/µm² or more and 0.1 particles/µm² or less.

2. The stabilizer material for superconductor according to claim 1,
wherein, of the unavoidable impurities, the amount of Fe is 10 ppm by mass or less, the amount of Ni is 10 ppm by mass or less, the amount of As is 5 ppm by mass or less, the amount of Ag is 50 ppm by mass or less, the amount of Sn is 4 ppm by mass or less, the amount of Sb is 4 ppm by mass or less, the amount of Pb is 6 ppm by mass or less, the amount of Bi is 2 ppm by mass or less, and the amount of P is 3 ppm by mass or less.

3. The stabilizer material for superconductor according to claim 1 or 2, wherein a residual resistance ratio (RRR) is 250 or more.

4. A superconducting wire comprising:
a strand including a superconducting material; and
the stabilizer material for superconductor according to any one of claims 1 to 3.

5. A superconducting coil having a structure including a winding portion in which the superconducting wire according to claim 4 is wound around a peripheral surface of a winding frame.

## Patentansprüche

1. Stabilisatormaterial für einen Supraleiter, der für einen supraleitenden Draht verwendet wird, wobei das Stabilisatormaterial für einen Supraleiter umfasst:
ein Kupfermaterial
wobei das Kupfermaterial Mg als Zusatzelement in einer Gesamtmenge von 3 Masse-ppm oder mehr und 100 Masse-ppm oder weniger enthält, wobei der Rest Cu und unvermeidliche Verunreinigungen sind,
die Gesamtkonzentration von unvermeidlichen Verunreinigungen außer O, H, C, N und S, welche Gaskomponenten sind, 5 Masse-ppm oder mehr und 100 Masse-ppm oder weniger beträgt,
die Gesamtmenge von S, Se und Te, die in den unvermeidlichen Verunreinigungen eingeschlossen sind, 0 Masse-ppm oder mehr und 25 Masse-ppm oder weniger beträgt,
das Verhältnis y/x der Gesamtmenge von Mg als Zusatzelement (y Masse-ppm) zu der Gesamtmenge von S, Se und Te (x Masse-ppm) im Bereich von 0,5≤y/x≤100 liegt,
die Mengen von Te und Se kleiner als die Menge von S sind,
Verbindungen, die eines oder mehrere, ausgewählt aus MgS und M₉SO₄, einschließen, worin ein Teil von S mit Te oder Se substituiert sein kann, in der Matrix vorhanden sind und
die Zahlendichte der Verbindungen mit einer Partikelgröße von 0,1 µm oder größer 0,001 Partikel/µm² oder mehr und 0,1 Partikel/µm² oder weniger beträgt.

2. Stabilisatormaterial für einen Supraleiter gemäß Anspruch 1,
wobei von den unvermeidlichen Verunreinigungen die Fe-Menge 10 Masse-ppm oder weniger beträgt, die Ni-Menge 10 Masse-ppm oder weniger beträgt, die As-Menge 5 Masse-ppm oder weniger beträgt, die Ag-Menge 50 Masse-ppm oder weniger beträgt, die Sn-Menge 4 Masse-ppm oder weniger beträgt, die Sb-Menge 4 Masse-ppm oder weniger beträgt, die Pb-Menge 6 Masse-ppm oder weniger beträgt, die Bi-Menge 2 Masse-ppm oder weniger beträgt und die P-Menge 3 Masse-ppm oder weniger beträgt.

3. Stabilisatormaterial für einen Supraleiter gemäß Anspruch 1 oder 2,
wobei ein Restwiderstandsverhältnis (RRR) 250 oder mehr beträgt.

4. Supraleitender Draht, umfassend:
einen Einzeldraht, der ein supraleitendes Material einschließt, und
das Stabilisatormaterial für einen Supraleiter gemäß irgendeinem der Ansprüche 1 bis 3.

5. Supraleitende Spule mit einer Struktur, die einen Wickelabschnitt einschließt, in dem der supraleitende Draht gemäß Anspruch 4 um eine Umfangsfläche eines Wicklungsrahmens gewickelt ist.

## Revendications

1. Matériau stabilisateur pour supraconducteur utilisé pour un fil supraconducteur, le matériau stabilisateur pour supraconducteur comprenant : un matériau de cuivre,
dans lequel le matériau de cuivre contient du Mg en tant qu'élément additif pour une quantité totale de 3 ppm en masse ou plus et de 100 ppm en masse ou moins, le reste étant du Cu et des impuretés inévitables,
la concentration totale des impuretés inévitables autres que O, H, C, N et S, qui sont des composants gazeux, est de 5 ppm en masse ou plus et de 100 ppm en masse ou moins,
la quantité totale de S, Se et Te qui sont inclus dans les impuretés inévitables est supérieure à 0 ppm en masse et de 25 ppm en masse ou moins,
un rapport y/x de la quantité totale de Mg en tant qu'élément additif (y ppm en masse) à la quantité totale de S, Se et Te (x ppm en masse) est dans la plage de 0,5 ≤ y/x ≤ 100,
les quantités de Te et Se sont inférieures à la quantité de S,
des composés incluant un type ou plus choisis parmi MgS et MgSO₄, dans lesquels une partie de S peut être substituée par Te ou Se, sont présents dans la matrice, et
la densité numérique des composés présentant une taille de particule de 0,1 µm ou plus est de 0,001 particule/µm² ou plus et de 0,1 particule/µm² ou moins.

2. Matériau stabilisateur pour supraconducteur selon la revendication 1,
dans lequel, parmi les impuretés inévitables, la quantité de Fe est de 10 ppm en masse ou moins, la quantité de Ni est de 10 ppm en masse ou moins, la quantité d'As est de 5 ppm en masse ou moins, la quantité d'Ag est de 50 ppm en masse ou moins, la quantité de Sn est de 4 ppm en masse ou moins, la quantité de Sb est de 4 ppm en masse ou moins, la quantité de Pb est de 6 ppm en masse ou moins, la quantité de Bi est de 2 ppm en masse ou moins, et la quantité de P est de 3 ppm en masse ou moins.

3. Matériau stabilisateur pour supraconducteur selon la revendication 1 ou 2, dans lequel un rapport de résistance résiduelle (RRR) est de 250 ou plus.

4. Fil supraconducteur comprenant :
un toron incluant un matériau supraconducteur ; et
le matériau stabilisateur pour supraconducteur selon l'une quelconque des revendications 1 à 3.

5. Bobine supraconductrice présentant une structure incluant une partie d'enroulement dans laquelle le fil supraconducteur selon la revendication 4 est enroulé autour d'une surface périphérique d'un cadre d'enroulement.
